# EUROPÄISCHE PATENTANMELDUNG

(11) **EP 4 261 002 A1**
(43) Veröffentlichungstag der Anmeldung: **18.10.2023**
(21) Anmeldenummer: 23167129.8
(22) Anmeldetag: 06.04.2023
(51) Int. Cl.: B29C 43/54, B29C 37/00, B29C 33/38, B29C 33/40, B29C 43/36, B29C 33/02, B29C 33/00, B29C 33/04

(54) **GIESSFORM ZUR HERSTELLUNG EINES EINE VORDER- UND EINE RÜCKSEITE AUFWEISENDEN GIESSKÖRPERS AUS EINER AUSHÄRTBAREN GIESSMASSE**

(30) Priorität: 12.04.2022 DE 102022108881
(71) Anmelder: Schock GmbH, 94209 Regen (DE)
(72) Erfinder: PATERNOSTER, Rudolf, 94269 Rinchnach (DE); PLEDL, Xaver, 94227 Zwiesel (DE); PROBST, Alois, 94209 Regen (DE)
(74) Vertreter: Lindner Blaumeier Patent- und Rechtsanwälte

(57) **Zusammenfassung**

Gießform zur Herstellung eines eine Vorder- und eine Rückseite aufweisenden Gießkörpers aus einer aushärtbaren Gießmasse, mit zumindest einem die Vorderseite formenden ersten Formteil (2) und einem die Rückseite formenden zweiten Formteil (3), die zusammen einen Gießhohlraum (4) begrenzen, wobei das erste Formteil (2) eine den Gießhohlraum (4) begrenzende erste Metalllage (5) und das zweite Formteil (3) eine den Gießhohlraum (4) begrenzende zweite Metalllage (6) aufweist, wobei zumindest eine Metalllage (5, 6) zur Veränderung des Gießhohlraumvolumens zumindest abschnittsweise verformbar ist, wobei zumindest ein Formteil (3) eine flächige Zwischenlage (9) aus einem elastisch verformbaren und komprimierbaren Material aufweist, gegen die die Metalllage (6) des Formteils (3) unter Aufbau einer Rückstellkraft seitens der sich verformenden Zwischenlage (9) bewegbar ist.

## Beschreibung

Die Erfindung betrifft eine Gießform zur Herstellung eines eine Vorder- und eine Rückseite aufweisenden Gießkörpers aus einer aushärtenden Gießmasse, mit zumindest einem die Vorderseite formenden ersten Formteil und einem die Rückseite formenden zweiten Formteil, die zusammen einen Gießhohlraum begrenzen, wobei das erste Formteil eine den Gießhohlraum begrenzende erste Metalllage und das zweite Formteil eine den Gießhohlraum begrenzende zweite Metalllage aufweist, wobei zumindest eine Metalllage zur Veränderung des Gießhohlraumvolumens zumindest abschnittsweise verformbar ist.

Eine solche Gießform, wie sie beispielsweise aus EP 1 237 694 B1 bekannt ist, dient der Herstellung von Gießkörpern aus einer aushärtbaren Gießmasse, die bevorzugt eine Polymermatrix sowie darin eingebrachte Füllstoffe zur Herstellung von Komposit-Gießkörpern aufweist. Ein Beispiel für hierüber herstellbare Gießkörper sind Küchenspülen, die eine entsprechend komplexe, dreidimensionale Form aufweisen, die über den Gießhohlraum respektive die Form der beiden Metalllagen abgebildet wird. Aber auch andere Gießkörper wie beispielsweise Waschbecken, Duschtassen und Ähnliches können über eine solche Gießform hergestellt werden.

Zur Herstellung des Gießkörpers wird die Gießmasse in einen Gießhohlraum eingebracht, der über zwei Formteile begrenzt wird. Das erste Formteil dient der Ausformung der Vorderseite des Gießkörpers, das zweite Formteil der Ausformung der Rückseite. Dabei weist jedes Formteil eine Metalllage auf, also eine formgebendes, dünnes Metallblech, das unmittelbar den Gießhohlraum vorder- und rückseitig begrenzt, also unmittelbar formgebend ist. Die Gießmasse liegt folglich an diesen beiden Metalllagen an.

Bei der Gießmasse handelt es sich um eine aushärtbare Reaktionsmasse, beispielsweise eine auf Polyacrylat oder Polymethacrylat basierende Reaktionsmasse. Die Reaktionsmasse wird unter Druck mit mehreren bar in den Gießhohlraum eingebracht, um sicherzustellen, dass sich dieser vollständig füllt, wonach der Polymerisationsprozess gestartet wird. Hierzu wird bei der aus EP 1 237 694 B1 bekannten Gießform die die Vorderseite ausbildende erste Metalllage mittels einer ihr zugeordneten Heizeinrichtung über die gesamte Metalllagenflächen erwärmt, so dass es zwangsläufig auch zu einer Erwärmung der Gießmasse kommt, die wie gesagt an der ersten Metalllage anliegt. Wird die Gießmasse über die Polymerisationsstarttemperatur erwärmt, so setzt die exotherme Polymerisationsreaktion ein, wobei sich die Polymerisationsfront sukzessive durch die Gießmasse zur gegenüberliegenden zweiten Metalllage bewegt. Hierbei kommt es reaktionsbedingt zu einer Volumenverringerung der reagierenden, aushärtenden Gießmasse, also zu einem Schrumpfen respektive einem Schwund des Polymermaterials.

Um zu vermeiden, dass sich schrumpfungsbedingt die sich ausbildende Seite respektive Fläche des Gießkörpers von der Metalllage löst, was zu Oberflächenfehlern führen kann, ist bei der Gießform gemäß EP 1 237 694 B1 vorgesehen, eine der beiden Metalllagen, dort die zweite Metalllage, die die Rückseite ausformt, beweglich zu lagern, so dass Metalllage der schwindenden Gießmasse bzw. dem schwindenden Gießkörper nachgeführt werden kann und eine permanente flächige Anlage der Gießmasse bzw. des Gießkörpers an der beweglichen Metalllage sichergestellt ist. Die Metalllage ist zu diesem Zweck mit einem geringen Abstand bezüglich einer Stützform des Formteils angeordnet, wobei in diesen sich bildenden Zwischenraum zwischen der Stützform und der Metalllage über entsprechende Zuleitungen und eine externe Pumpe ein flüssiges Druckmedium eingebracht werden kann, so dass aufgrund der fixierten Stellung der beiden Formteile zueinander und auch der positionsfesten Anordnung der Stützform die Metalllage mit Einbringen des Druckmediums nachgedrückt werden kann, also das Gießhohlraumvolumen reduziert werden kann. Hierüber kann erfolgreich sichergestellt werden, dass ein permanenter, vollflächiger Kontakt der Gießmasse bzw. des sich ausbildenden Gießkörpers zu beiden Metalllagen gegeben ist. Gleichwohl ist der Aufbau dieser Gießform im Hinblick auf die Nachführung der Metalllage aufwendig, da hierzu einerseits eine spezifische Formteilkonstruktion zur Realisierung des Zwischenraums erforderlich ist, zum anderen entsprechende Zuleitungen, ein Druckmedium sowie eine Pumpe und Ähnliches.

Der Erfindung liegt damit das Problem zugrunde, eine dem gegenüber verbesserte Gießform anzugeben.

Zum Lösen dieses Problems ist erfindungsgemäß bei einer Gießform der eingangs genannten Art vorgesehen, dass zumindest ein Formteil eine flächige Zwischenlage aus einem elastisch verformbaren und komprimierbaren Material aufweist, gegen die die Metalllage des Formteils unter Aufbau einer Rückstellkraft seitens der sich verformenden Zwischenlage bewegbar ist.

Bei der erfindungsgemäßen Gießform ist mit besonderem Vorteil als fester integrierter Bestandteil eines der beiden Formteile eine flächige Zwischenlage aus einem elastisch verformbaren und komprimierbaren Material vorgesehen. Diese flächige Zwischenlage respektive das Lagenmaterial ist in der Lage, einerseits bei entsprechendem Druck komprimiert zu werden, andererseits aber auch bei einer Druckentlastung sich wieder zurückzustellen, das heißt, dass bei einer Komprimierung eine Rückstellkraft aufgebaut wird, die geeignet ist, die Zwischenlage wieder in die Ausgangsform zu überführen. Erfindungsgemäß ist eine der Metalllagen gegen diese elastische und komprimierbare Zwischenlage bewegbar. Bevorzugt handelt es sich bei dieser Metalllage um die zweite Metalllage des zweiten Formteils, nachdem über die zweite Metalllage die Rückseite des Gießkörpers gebildet wird, die in der Regel in der Montagestellung beispielsweise einer Küchenspüle nicht sichtbar ist. Wie beschrieben, wird die fluide Gießmasse unter Druck mit beispielsweise 2 - 5 bar in den Gießhohlraum eingebracht. Dieser hohe Druck im Gießhohlraum führt nun dazu, dass die über die elastische und komprimierbare Zwischenlage letztlich beweglich gelagerte Metalllage, also bevorzugt die zweite Metalllage, aus ihrer Ausgangsposition bewegt wird, das heißt, sie wird gegen die elastische und komprimierbare Zwischenlage gedrückt, die hierbei unter Aufbau einer Rückstellkraft komprimiert wird. Nach Abschluss des Befüllvorgangs wird die Aushärtung, also die eigentliche Polymerisationsreaktion, initiiert, zumeist durch einen Wärmeeintrag in die Gießmasse. Der Wärmeeintrag kann beispielsweise über das erste Formteil, also über die erste Metalllage erfolgen, die hierzu erwärmt wird. Es kommt zum Start der exothermen Polymerisationsreaktion, resultierend in einem mit fortschreitender Polymerisation zunehmenden Schwund. Reduziert sich nun aber reaktionsbedingt das Volumen der Gießmasse respektive des sich sukzessive auspolymerisierenden Formkörpers, so wird dieser Schwund automatisch dadurch kompensiert, dass die beweglich gelagerte Metalllage, also vorzugsweise die zweite Metalllage, über die sich entspannende Zwischenlage nachgeführt wird, das heißt, die Zwischenlage dehnt sich wieder aus und drückt die Metalllage nach. Der Gießhohlraum wird demzufolge sukzessive verkleinert, dem Schwund der auspolymerisierenden Gießmasse folgend. Eine permanente flächige Anlage der Gießmasse an der entsprechenden Metalllage ist damit sichergestellt.

Die erfindungsgemäße Gießform ist gegenüber bisher bekannten Gießformen deutlich einfacher konzipiert, nachdem die automatische Nachführung oder Rückstellung über ein in ein Formteil integriertes Mittel, nämlich die elastische flächige Zwischenlage realisiert ist. Das heißt, dass das Formteil selbst mit einer integrierten Nachführungs- oder Nachstelleinrichtung versehen ist. Irgendwelche externen Stell- oder Nachführmittel wie die beschriebenen Zuleitungen, ein Druckmedium, eine Pumpe und Ähnliches sind vorteilhaft nicht von Nöten, wie auch der Aufbau der Gießform respektive des entsprechenden Formteils vereinfacht wird, da kein spezifischer Zwischenraum mehr auszubilden ist, sondern letztlich eine kompakte Formteilausbildung möglich ist.

Bevorzugt weist das zweite Formteil die Zwischenlage auf, so dass die zweite Metalllage gegen die Zwischenlage bewegbar ist. Wie beschrieben bildet die zweite Metalllage die Rückseite des Formteils aus, wobei diese Rückseite in der Montagestellung des Gießkörpers regelmäßig nicht sichtbar ist. Aus diesem Grund ist es zweckmäßig, die diese Seite ausbilden der Metalllage beweglich zu lagern, während die erste Metalllage, die die Vorderseite, also die Sichtseite des Gießkörpers ausformt, unbeweglich ist, so dass an dieser Schnittstelle zu keinem Zeitpunkt irgendwelche Relativbewegungen stattfinden.

Das zentrale Nachführ- oder Rückstellmittel ist die flächige elastische und komprimierbare Zwischenlage, mit der die Metalllage gekoppelt ist. Bevorzugt wird als Zwischenlagenmaterial ein elastisches und komprimierbares Kunststoffmaterial verwendet, das ein entsprechendes elastisches Rückstellvermögen unter Aufbau einer entsprechenden Rückstellkraft über viele Arbeitszyklen zeigt.

Bevorzugt wird hierbei eine elastische, komprimierbare Zwischenlage aus Moosgummi verwendet. Als Moosgummi wird ein weitgehend geschlossenporiger, elastischer Schaumstoff bezeichnet. Ein solcher Porengummi kann beispielsweise aus Chloropren, Naturkautschuk, Acrylnitril-Butadien-Kautschuk oder vergleichbaren synthetischen Kautschuken wie Styrol-Butadien-Kautschuk, Ethylen-Propylen-DienKautschuk oder ähnlichen Kautschuken hergestellt werden, wobei diese Aufzählung nicht abschließend ist. Ein derartiges elastisches Kunststoffmaterial, insbesondere in Form eines Moosgummis, bietet sich insbesondere hinsichtlich seiner Ausführung als auch größerflächige Zwischenlage an, die auch auf einfache Weise entsprechend der dreidimensionalen Form der Metalllage formbar und demzufolge in das Formteil integrierbar ist.

Bevorzugt sollte die elastische, komprimierbare Zwischenlage respektive das Zwischenlagematerial eine Shore Härte Typ A von 5° - 35°, vorzugsweise von 15° +/-5° aufweisen. Es handelt sich also um ein weicheres Material, das über den gegebenen Gießdruck entsprechend über seine gesamte Fläche komprimiert werden kann, gleichzeitig aber auch eine entsprechende Rückstellkraft für die Nachführung aufbauen kann.

Die Dicke der Zwischenlage sollte zwischen 2 - 10 mm, insbesondere zwischen 3 - 7 mm und vorzugsweise zwischen 4 - 6 mm betragen. Die konkrete Dicke hängt letztlich von den elastischen Eigenschaften des gewählten Zwischenlagenmaterials sowie dem gegebenen Schwund, der zu kompensieren ist, ab.

Die Zwischenlage selbst überdeckt bevorzugt wenigstens 50%, vorzugsweise wenigstens 75% und maximal die gesamte Fläche, mit der die zweite Metalllage den Gießhohlraum begrenzt. Das heißt, dass sich die elastische Zwischenlage über den wesentlichen, gegebenenfalls des gesamten Bereich, mit dem die Metalllage mit der Gießmasse in Berührung kommt, erstreckt, also nahezu oder vollständig bis zu den Rändern hinläuft respektive bis zu dem Rand, mit dem das Formteil am anderen Formteil anliegt. Hierüber wird sichergestellt, dass es in den wesentlichen bzw. letztlich in allen Bereichen zu einer entsprechenden, quasi aktiven, weil aus der aufgebauten Rückstellkraft resultierenden Nachführung der Metalllage kommt.

Wie beschrieben, wird der Polymerisationsvorgang dadurch initiiert, dass die Gießmasse lokal über eine Starttemperatur erwärmt wird. Zumeist ist am ersten Formteil eine Heizeinrichtung vorgesehen, die an der Rückseite der ersten Metalllage flächig anliegt. Diese Heizeinrichtung kann rohr- oder bandförmige Heizelemente, die in einer Masse eingebettet sind, aufweisen, wobei diese Masse bevorzugt eine Wärmeleitmasse, beispielsweise eine Polymermasse mit eingebetteten Metallpartikeln, vornehmlich Kupferpartikel, ist. Die Polymerisation beginnt dann unmittelbar an der ersten Metalllage, also an der Vorderseite, wobei sich die Polymerisationsfront sodann in Richtung der zweiten Metalllage fortsetzt. Dabei kann in Weiterbildung der Erfindung vorgesehen sein, dass an der Rückseite der zweiten Metalllage eine diese flächig belegende Heizeinrichtung vorgesehen ist, die an der flächigen Zwischenlage anliegt. Über diese Heizeinrichtung an der zweiten Metalllage kann auch von der Rückseite her gezielt geheizt werden, um den Polymerisationsprozess zu steuern. Um die Heizleistung bestmöglich in die zweite Metalllage einkoppeln zu können, liegt diese Heizeinrichtung flächig an der zweiten Metalllage an. Der Heizeinrichtung folgt nun erfindungsgemäß die flächige, elastische, komprimierbare Zwischenlage, die wiederum abgestützt ist, so dass sie zum Komprimieren widergelagert ist. Das heißt, dass erfindungsgemäß die zweite Metalllage quasi indirekt über die Heizeinrichtung mit der elastischen Zwischenlage bewegungsgekoppelt ist.

Die Heizeinrichtung selbst umfasst rohr- oder bandförmige Heizelemente, die in einer wärmeleitfähigen Masse eingebettet sind. Die rohrförmigen Heizelemente sind beispielsweise Heizrohre oder Heizschlangen, die mit heißem Wasser oder einem anderen Heizfluid durchspült werden. Alternativ können auch bandförmige Heizelemente in Form von elektrischen Heizleitern vorgesehen sein. Diese Heizelemente sind grundsätzlich in einer entsprechenden wärmeleitfähigen Masse eingebettet, die es ermöglicht, diese Heizeinrichtung entsprechend der dreidimensionalen Form der zweiten Metalllage zu verlegen, so dass sie exakt angepasst werden kann. Zumindest die Heizelemente der Heizeinrichtung, die über eine elastischer Zwischenlage beweglich ist, worauf nachfolgend noch eingegangen wird, kann in eine wärmeleitfähige Masse, die darüber hinaus auch elastisch ist, eingebettet sein. Die Heizelemente können z.B. spiralförmig oder mäanderförmig verlegt sein. Auch können pro Heizeinrichtung zwei oder mehr separate Heizkreise vorgesehen sein, die separat gesteuert werden können, so dass sich die Wärmezufuhr lokal und auch zeitlich noch flexibler gestalten lässt.

Dabei handelt es sich bei der Masse bevorzugt um eine Wärmeleitmasse, über die die über die Heizelemente eingebrachte Wärme bestmöglich homogen über die Fläche verteilt werden kann. Diese Wärmeleitmasse kann eine Polymermasse mit eingebettetem Metallpartikeln, vornehmlich Kupferpartikeln, sein.

Wie beschrieben, ist die elastische und komprimierbare Zwischenlagen, also die Moosgummilage, für deren Komprimierung entsprechend abzustützen. Hierzu ist die Zwischenlage bevorzugt direkt an einem Formteilträger des zweiten Formteils angeordnet, also direkt an diesem Formteilträger abgestützt. Der Formteilträger ist während des gesamten Herstellungsprozesses, wenn die beiden Formteile geschlossen sind, positionsfest, bildet also ein entsprechendes Widerlager. Gegen dieses bewegt sich die zweite Metalllage, wenn die Gießmasse mit hohem Druck eingebracht wird und wenn sich die Gießmasse beim Erwärmen zwecks Initiierung des Polymerisationsvorgangs im Volumen etwas ausdehnt. Ein Aufbau einer entsprechend hohen Rückstellkraft ist damit sichergestellt.

Das erste Formteil weist weiterhin einen ersten Formteilträger und das zweite Formteil einen zweiten, vorstehend bereits angesprochenen Formteilträger auf. Beide Formteilträger sind zweckmäßigerweise aus Polymerbeton, der eine möglichst geringe Schwindung zeigt. Ein solcher Polymerbeton zeichnet sich durch die Verwendung eines Kunststoffs als Bindemittel enthaltend Füllstoffe, die vorzugsweise eine möglichst geringe Wärmekapazität aufweisen, aus. Es liegt demzufolge eine Kunststoff-Matrix vor, wobei in diese z.B. Gesteinspartikel eingebettet sind, beispielsweise in Form von Kies, Sand oder Gesteinsmehl, wobei diese Partikel über die Polymermatrix fixiert sind.

Die beiden Metalllagen sind zweckmäßigerweise aus Nickel, also aus einem entsprechend großflächigen Nickelblech gebildet. Die erste Metalllage kann dabei eine Dicke von 3 - 8 mm, insbesondere von 4 - 7 mm und vorzugsweise von 6 mm aufweisen. Die zweite Metalllage ist bevorzugt etwas dünner, sie weist eine Dicke von 1 - 4 mm vorzugsweise von 2,5 mm auf. Die erste Metalllage kann etwas dicker gewählt werden, da sie positionsfest ist und ein entsprechendes Metallvolumen eine homogene Wärmeverteilung sicherstellt. Denn wie beschrieben wird regelmäßig der Polymerisationsvorgang durch einen initialen Wärmeeintrag von der Vorderseite her, also über die erste Metalllage, initiiert. Dem gegenüber ist die zweite Metalllage dünner, da sie beweglich sein muss, sie darf also nicht zu dick und damit zu steif gewählt werden.

Weiterhin kann vorgesehen sein, dass an der Metalllage des ersten oder des zweiten Formteils randseitig umlaufend ein Isolationselement angeordnet ist, das in der Schließstellung randseitig an der anderen Metalllage anliegt und beide einander nicht berührenden Metalllagen thermisch voneinander trennt. Erfindungsgemäß ist eine der beiden Metalllagen mit einem randseitig umlaufenden Isolationselement ausgerüstet, über das in der Schließstellung die beiden Metalllagen thermisch voneinander getrennt, also isoliert sind. Die Metalllagen liegen bei der erfindungsgemäßen Gießform nicht mehr aneinander an, vielmehr ist über das Isolationselement eine Isolationsebene integriert, über die wirkungsvoll ein Wärmeabfluss von der beheizten ersten Metalllage zur zweiten Metalllagen im Rand- oder Auflagebereich verhindert wird. Die vorteilhafte thermische Isolation bewirkt, dass es auch im Randbereich zu einer entsprechenden, fehlerfreien und zeitlich konsistenten Polymerisationsreaktion kommen kann, da über die beheizte Metalllage ein ausreichender Wärmeeintrag zum Start der Polymerisation möglich ist. Da durch den Schwundausglich, realisiert über die nachdrückende Zwischenlage, sichergestellt ist, dass auch im Randbereich stets Gießmasse vorhanden ist, ist eine optimale Polymerisation ohne Bildung von Fehlstellen wie Löchern oder Mattierungen auch am Rand möglich. Das beispielsweise rechteckige umlaufende Isolationselement, das auch aus einzelnen Elementabschnitten zusammengesetzt sein kann, die einander umlaufend ergänzen, ragt an der Randfläche der Metalllage, an der das Isolationselement angeordnet ist, etwas hervor, so dass es beim Schließen der Formteile zwangsläufig gegen die randseitige Anlagefläche des anderen Metallelements läuft und gleichzeitig auch beide Formteile gegeneinander abstützen kann.

Das Isolationselement selbst ist bevorzugt aus einem Kunststoff. Die Verwendung eines Kunststoffs, der zwangsläufig eine gewisse Elastizität respektive Flexibilität oder Weichheit aufweist, hat, neben seinem thermischen Isolationsvermögen, auch den Vorteil, dass über das Kunststoff-Isolationselement auch etwaige Unregelmäßigkeiten der Metalllagenränder kompensiert werden können. So ermöglicht das Isolationselement einen vollständigen, absolut spaltfreien Verschluss des Gießhohlraums, das heißt, dass sich keine Mikrospalte am Randbereich, die zu nachzubearbeitenden Angussfehlern führen, ausbilden, wie dies aber bei einer Gießform gemäß EP 1 237 694 B1 der Fall sein kann. Da die Integration des Isolationselements jeden Kontakt der beiden Metalllagen vermeidet, kann auch ein bei einem solchen unmittelbaren Lagenkontakt gegebenes Verletzungsrisiko der sichtseitigen Kontaktkante verringert werden.

Als Isolationselement kommt bevorzugt ein Thermoplast, ein Duroplast oder ein Elastomer zum Einsatz. Beispielsweise kann das Isolationselement aus Polyoxymethylen (POM) oder einem Polyester-Urethan-Kautschuk bzw. Polyurethan-Elastomer sein, wie z.B. unter dem Handelsnamen "Vulkollan ^{®}" erhältlich, wobei dies nur ein Beispiel ist. Auch andere Kunststoffe können natürlich verwendet werden, sofern sie die gewünschten Eigenschaften aufweisen. Eine dieser Eigenschaften ist die Härte des Isolationselements respektive des verwendeten Materials. Dieses sollte eine Härte Shore A von 80 - 100, insbesondere von Shore A 90 aufweisen.

Ferner kann das Isolationselement mit einer nichthaftenden Eigenschaft gegenüber der Reaktionsmasse ausgestaltet sein. Hierüber wird sichergestellt, dass die weder die Reaktionsmasse, also die Gießmasse, noch der auspolymerisierte Formkörper an dem Isolationselement anklebt, was gegebenenfalls zu Fehlstellen führen könnte. Diese nichthaftende Eigenschaft kann z.B. durch das Material des Isolationselements selbst bereitgestellt werden, oder z. B. durch eine entsprechende Oberflächenbeschichtung des Isolationselements.

Das Isolationselement selbst ist bevorzugt leistenförmig und weist einen rechteckigen Querschnitt auf. Die beiden Metalllagen weisen entsprechende ebene Anlageflächen auf, so dass durch Verwendung eines derartigen leistenförmigen, breiten Isolationselements eine beidseitig große, ausreichende Anlagefläche gegeben ist, über die sich auch die Last hinreichend verteilt, so dass die Flächenpressung entsprechend reduziert werden kann. Die Fixierung des Isolationselements kann z.B. einfach durch Ankleben an die Metalllage erfolgen. Alternativ oder zusätzlich kann die Halterung auch mittels eines oder mehrerer Klemmelemente wie Klemmleisten o.dgl. erfolgen.

Dem trägt ferner die Erfindungsausgestaltung Rechnung, wonach der Randbereich der Metalllage, gegen die sich das Isolationselement beim Schließen legt, gestuft ausgeführt ist und einen ersten Auflagebereich, gegen den das Isolationselement zu erst läuft, und einen zweiten Auflagebereich, gegen den das zwischen dem ersten Auflagebereich und der das Isolationselement tragenden Metalllagen gequetschte Isolationselement nach seiner Verformung läuft, aufweist. Das heißt, dass letztlich eine Metalllage im Auflagebereich zwei separate, gestufte Auflageflächen aufweist, wobei diese beiden Auflageflächen oder Auflagenbereiche um 0,2 - 2 mm, insbesondere um ca. 0,5 mm versetzt zueinander liegen. Beim Schließen läuft folglich das Isolationselement zuerst gegen den ersten, quasi vorstehenden Auflagebereich. Mit zunehmender Schließbewegung und Last wird das Isolationselement etwas gequetscht, das heißt, die Flächenpressung nimmt zu. Mit fortgesetzter Schließbewegung und damit Erhöhung der Last läuft das Isolationselement sodann gegen den zweiten flächigen Auflagebereich, wo es zusätzlich abgestützt wird und die gesamte Flächenpressung über beide Abstützbereiche oder Abstützflächen ausreichend reduziert wird.

Wenngleich es grundsätzlich denkbar ist, die gesamte Abdichtung des Gießhohlraums an den Rändern über das Isolationselement, das wie beschrieben bevorzugt aus Kunststoff ist und eine entsprechende Elastizität oder Flexibilität aufweist, zu realisieren, ist es auch denkbar, dass an der Metalllage, gegen die das Isolationselement beim Schließen läuft, ein umlaufendes und in der Schließstellung an dem Isolationselement anliegendes Dichtelement vorgesehen ist. Das heißt, dass die freiliegende Anlagefläche der Metalllage, gegen die das Isolationselement läuft, zusätzlich mit einem Dichtelement ausgerüstet ist, das eine zusätzliche Dichtebene zum Isolationselement hin realisiert. Das Dichtelement selbst ist bevorzugt in einer zwischen dem ersten und dem zweiten Auflagebereich ausgebildeten Nut aufgenommen. Das Dichtelement ist beispielsweise ein Dichtgummi aus einem entsprechenden Kunststoffmaterial, wiederum bevorzugt einem Elastomer. Beim Schließen läuft folglich das Isolationselement gegen dieses Dichtelement, so dass dieses mit Druck am Isolationselement anliegt.

Wie beschrieben wird über die der ersten Metalllage oder auch, wenn vorgesehen, über die der zweiten Metalllage zugeordnete flächige Heizeinrichtung großflächig und über die gesamte Metalllagenfläche Wärme eingekoppelt. Um dies möglichst effizient zu gestalten, kann die oder jede flächige Heizeinrichtung direkt an der Rückseite der jeweiligen Metalllage angeordnet sein und die Rückseite bis in den randseitigen Überlappungsbereich belegen. Das heißt, dass die Heizeinrichtung sich auch in den Bereich, in dem die beiden Metalllagen randseitig überlappen und über das Isolationselement thermisch voneinander getrennt sind, erstrecken. Dies wiederum führt dazu, dass zwangsläufig auch unmittelbar im Randbereich des Gießhohlraums, und gegebenenfalls sogar, was die Metalllagen angeht, randseitig etwas darüber hinaus ein aktiver Wärmeeintrag erfolgen kann.

Dabei ist es insbesondere denkbar, dass die Heizelemente der oder jeder Heizeinrichtung im randseitigen Überlappungsbereich enger verlegt sind als im sonstigen Bereich. Da wie beschrieben im Randbereich, wenn eine bewegliche Metalllage zur Schwundkompensation vorgesehen ist, aufgrund der Abstützung der Metalllagen keine nennenswerte Beweglichkeit der Metalllage gegeben ist, kann es wie beschrieben durch nicht kompensierten Polymerisationsschwund zu Materialfehlern wie Mattierungen oder Schrumpfmarken kommen, da ein entsprechender Nachdruck der Gießmasse aus dem schon auspolymerisierenden Volumen fehlt. Dem kann wie beschrieben einerseits durch die Integration des Isolationselements entgegengewirkt werden, aber auch zusätzlich dadurch, dass im Randbereich ein höherer Energieeintrag durch eine engere Verlegung der Heizelemente im Randbereich möglich ist. Das heißt, dass die Heizrohre oder Heizleiter im Randbereich, wo also die beiden Metalllagen übereinander liegen und über das Isolationselement abgestützt sind, enger aneinander liegend verlaufen als über die sonstige Heizelementfläche. Dies führt dazu, dass die Gießmasse im Randbereich sogar etwas früher aushärtet, als im sonstigen Volumen, so dass ein entsprechender Nachdruck durch die umliegende, unter Druck stehende und noch flüssige Gießmasse erfolgt und es demzufolge auch im Randbereich zu einem etwaigen Schrumpfausgleich kommt. Auch kann im Randbereich umlaufend ein separater Heizkreis vorgesehen sein, so dass lokal am Rand ein spezifischer Wärmeeintrag erfolgen kann und die randseitige Polymerisation früher angestoßen werden kann.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer erfindungsgemäßen Gießform,
- Fig. 2: eine vergrößerte Teilansicht des Bereichs II aus Fig. 1, und
- Fig. 3: eine vergrößerte Teilansicht des Bereichs III aus Fig. 1.

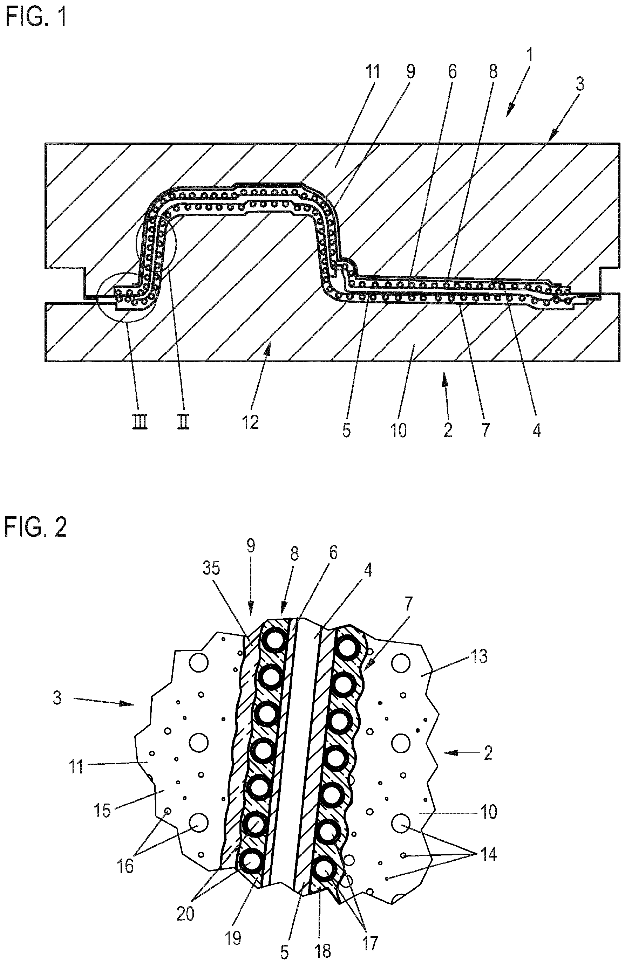

Fig. 1 zeigt eine Prinzipdarstellung einer erfindungsgemäßen Gießform 1, die zur Herstellung eines eine Vorder- und eine Rückseite aufweisenden Gießkörpers in Form einer aus einem Komposit-Werkstoff bestehenden Küchenspüle dient. Die Gießform umfasst ein erstes Formteil 2, das der Ausformung respektive Definition der Vorderseite des herzustellenden Gießkörpers dient, sowie ein zweites Formteil 3, das der Ausformung respektive Definition der Rückseite des herzustellenden Gießkörpers dient. Beide Formteile liegen randseitig aneinander und begrenzen einen Gießhohlraum 4, in den eine Gießmasse 5 bestehend aus einer aushärtbaren Polymermasse, also einer Reaktionsmasse, in die partikuläre Füllstoffe wie beispielsweise wie Quarzsand und Ähnliches eingebracht sind. Während das erste Formteil 2 regelmäßig positionsfest ist, kann das zweite Formteil 3 vertikal bewegt werden, also zum Schließen des Gießhohlraums 4 auf das untere erste Formteil 2 aufgesetzt werden.

Der Gießhohlraum 4 selbst wird durch eine erste Metalllage 5, die am ersten Formteil 2 angeordnet ist, sowie eine zweite Metalllage 6, die am zweiten Formteil 3 angeordnet ist, begrenzt. Mit diesen beiden Metalllage 5, 6 kommt die eingebrachte Gießmasse in Verbindung, liegt also flächig an diesen beiden Metalllagen 5, 6 an. Dabei ist an der Rückseite der ersten Metalllage 6 eine erste Heizeinrichtung 7, die die Rückseite der ersten Metalllage 5 nahezu vollflächig belegt, angeordnet. Über diese Heizeinrichtung kann die Temperierung der ersten Metalllage 5 und über diese die Erwärmung der Gießmasse von der Vorderseite her erfolgen. Auch das zweite Formteil 3 weist eine zweite Heizeinrichtung 8 auf, die an der Rückseite der zweiten Metalllage 6, diese letztlich vollflächig belegend, angeordnet ist. Über die zweite Heizeinrichtung 8 kann die zweite Metalllage 6 und über sie die Gießmasse temperiert werden, mithin also der Wärmeeintrag von der Rückseite her in die Gießmasse gesteuert werden. Der zweiten Heizeinrichtung 8 folgt eine elastische und komprimierbare Zwischenlage 9, bevorzugt aus einem Moosgummi, welche elastische, komprimierbare Zwischenlage ein Rückstellmittel oder Rückstellelement darstellt, über das eine gewisse Beweglichkeit der zweiten Metalllage 6 ermöglicht wird und gleichzeitig sichergestellt wird, dass die zweite Metalllage 6 in eine definierte Ausgangsposition wieder zurückgeführt werden kann. Auf die Funktion der elastischen und komprimierbaren Zwischenlage 9 wird nachfolgend in Bezug auf Fig. 2 noch näher eingegangen.

Weiterhin weist das erste Formteil 2 einen ersten Formteilträger 10 auf, an dem wiederrum die erste Heizeinrichtung 7 anliegt. Auch das zweite Formteil 3 weist einen zweiten Formteilträger 11 auf, an dem die elastische Zwischenlage 9 anliegt. Beide Formteilträger 10, 11 sind bevorzugt zumindest abschnittsweise, soweit die Metalllagen daran abgestützt sind, aus einem Polymerbeton.

Fig. 2 zeigt eine vergrößerte Ansicht des Bereichs II aus Fig. 1 unter Darstellung der einander gegenüberliegenden Bereiche des ersten Formteils 2 und des zweiten Formteils 3 unter Ausbildung des Gießhohlraums 4. Gezeigt ist rechts das erste Formteil 2 mit seinem Formteilträger 10 aus dem Polymerbeton, bestehend aus einer Polymermatrix 13 mit darin eingebetteten Füllstoffen, beispielsweise Kies- oder Sandpartikel und Ähnliches. Dem Formteilträger 10 folgt die erste Heizeinrichtung 7, bestehend aus rohrförmigen Heizelementen 17, die beispielsweise mäanderförmig oder als Heizschlangen und Ähnliches geführt sind und die in einer Wärmeleitmasse 18 eingebettet sind. Durch die Heizelemente 17 strömt in diesem Fall ein temperiertes Heizfluid wie beispielsweise Wasser. Alternativ hierzu können als Heizelemente 17 auch elektrische Heizbände oder dergleichen vorgesehen.

Auf der Heizeinrichtung 7, in unmittelbaren Kontakt mit ihr, ist die erste Metalllage 5 angeordnet, bei der es sich um ein Nickelblech handelt, beispielsweise mit einer Stärke von 6 mm. Diese erste Metalllage 5 begrenzt ersichtlich unmittelbar den Gießhohlraum 4.

Gezeigt ist ferner ausschnittsweise das zweite Formteil 3 mit seinem Formteilträger 11, ebenfalls bestehend aus einer Polymermatrix 15 mit darin eingebetteten Füllstoffen 16 wiederum in Form von Kies- oder Sandpartikel etc. Diesem Formteilträger 11 folgt die elastische und komprimierbare Zwischenlage 9, die aus einem Moosgummi 35 gebildet ist, also aus einem elastischen, geschäumten Kunststoffmaterial. Bei einem Moosgummi 35 handelt es sich um einen weitgehend geschlossenporigen, elastischen und komprimierbaren Schaumstoff, also einen Porengummi, der aus einem geschäumten Kautschukmaterial besteht. Diese elastische Zwischenlage 9 weist eine Dicke bevorzugt von ca. 4 mm auf, sowie eine Shore-Härte Typ A von 5° - 35°, vorzugsweise von 15° +/- 5° Über diese elastische und komprimierbare Zwischenlage 9 ist einerseits die zweite Heizeinrichtung 8 mit dem Formteilträger 11 verbunden, wobei auch hier die zweite Heizeinrichtung 8 aus einer Wärmeleitmasse 19 mit darin eingebetteten Heizelementen 20 in Form von Heizrohren besteht, die, wie auch die rohrförmigen Heizelemente 17, beispielsweise Kupferrohre sind und ebenfalls von einem Heizfluid durchströmt sind. Für zumindest die Wärmeleitmasse 19, gegebenenfalls für beide Wärmeleitmassen 18, 19 gilt, dass sie elastisch, also flexibel sind, so dass die flächigen oder mattenförmigen Heizeinrichtungen 7, 8 problemlos der dreidimensionalen Form des jeweiligen Formteilträgers 10, 11 folgend verlegt werden können und insbesondere die Bewegung der elastischen Zwischenlage seitens der zweiten Heizeinrichtung 8 mitgemacht werden kann.

An der Heizeinrichtung 8 ist schließlich die zweite Metalllage 6 angeordnet, bei der es sich ebenfalls um ein Nickelblech handelt, das jedoch nur eine Dicke von ca. 2,5 mm aufweist, was erforderlich ist, da diese zweite Metalllage 6 beweglich ist, also im eigentlichen Herstellbetrieb ihre Position ändert. Dies wird dadurch ermöglicht, dass die zweite Metalllage 6 zusammen mit der zweiten Heizeinrichtung 8 über die elastische Zwischenlage 9 relativ zum zweiten Formteilträger 11 bewegt werden kann, also ihre Position ändern kann.

Wird ein Gießvorgang begonnen, so befindet sich die zweite Metalllage 6 in ihrer Ausgangsposition, der Gießhohlraum 4 weist ein definiertes Ausgangsvolumen auf. Die zweite Metalllage 6 ist in einem definierten Abstand zur ersten Metalllage 5, die Zwischenlage 9 eist entspannt und nicht oder nur geringfügig komprimiert. Zu Beginn des Gießvorgangs wird die Gießmasse, bei der es sich um eine hinreichen fließfähige Masse auf Polyacrylat oder Polymethacrylat-Basis handeln kann, in den Gießhohlraum 4 mit Druck eingebracht. Der Gießdruck liegt im Bereich von ca. 2 - 5 bar. Resultierend aus diesem beachtlich hohen Druck innerhalb des Gießhohlraums 6, der erforderlich ist, um die Verteilung der Gießmasse im gesamten Gießhohlraum 4 sicherzustellen, baut sich zu den beiden Metalllagen 5, 6 hin ein entsprechend hoher Flächendruck auf. Die erste Metalllage 5 ändert ihre Position nicht, da sie unmittelbar am ersten Formteilträger 10 abgestützt ist. Demgegenüber weicht die zweite Metalllage 6 dem sich aufbauenden Druck aus. Druckbedingt kommt es hierbei zu einer Komprimierung der elastischen Zwischenlage 9, diese wird also über ihre gesamte Fläche zusammengedrückt, was möglich ist, da sie wiederum an dem positionsfesten zweiten Formteilträger 11 abgestützt ist. Das heißt, dass durch den hohen Einspritzdruck das Gießhohlraumvolumen vergrößert werden kann, resultierend aus einer Bewegung der zweiten Metalllage 6 gegen die elastische und komprimierbare Zwischenlage 9 bzw. den Moosgummi 35, die bzw. der hierbei unter Aufbau einer Rückstellkraft komprimiert wird.

Sodann wird der Polymerisationsprozess initiiert, was regelmäßig dadurch erfolgt, dass die erste Heizeinrichtung 7 angesteuert wird, mithin also ein Heizfluid durch die Heizelemente 17 zirkuliert. Es kommt hierbei zu einer homogenen Erwärmung der Heizeinrichtung 7 und über diese der ersten Metalllage 5. Diese erwärmt nun wiederum die Gießmasse im Gießhohlraum 4, die sich hierbei temperaturbedingt im Volumen etwas vergrößert, was zu einer weiteren Komprimierung der elastischen Zwischenlage 9 führt, da der Innendruck im Gießhohlraum 4 durch diese Volumenvergrößerung der Gießmasse weiter erhöht wird.

Ist die lokale Erwärmung an der Grenzfläche zur ersten Metalllage 5 so groß, dass eine Polymerisationsstarttemperatur erreicht wird, so beginnt an dieser Schnittstelle die exotherme Polymerisationsreaktion, das heißt, dass die Polymermatrix auspolymerisiert, wobei diese Polymerisationsfront sukzessive in die Gießmasse wandert, sich also in Richtung der zweiten Metalllage 6 bewegt. Dabei wird auch die zweite Metalllage 6 über die zweite Heizeinrichtung 8 zu gegebener Zeit temperiert, um folglich auch von dieser Seite die Polymerisationsreaktion zu steuern. Das heißt, dass auch von dieser Seite her, nach einem definierten Zeitschema, die Polymerisationsreaktion initiiert wird. Da wie beschrieben die Polymerisationsreaktion exotherm ist, setzt sie sich selbsttätig im Volumen fort.

Mit der Polymerisation einhergeht jedoch auch ein Schrumpfen der Gießmasse respektive des sich ergebenden, polymerisierten Gießkörpers, mithin also eine Volumenverkleinerung. Damit jedoch sichergestellt wird, dass die Gießmasse respektive die auspolymerisierte Außenhaut des Gießkörpers stets in Kontakt sowohl mit der ersten Metalllage 5 als auch mit der zweiten Metalllage 6 ist, wird nun automatisch die zweite Metalllage 6, die zuvor aus ihrer Ausgangsstellung unter Komprimierung der elastischen Zwischenlage 9 bewegt wurde, über die elastische, komprimierte Zwischenlage 9, die sich entspannt bzw. vergrößert, wieder zurückgestellt, also dem Polymerisationsschwund nachgeführt. Die Zwischenlage 9 hat, wie beschrieben, während der Komprimierung eine Rückstellkraft aufgebaut. Sinkt nun der Innendruck im Gießformhohlraum 4 resultieren aus dem Massenschwund, so kann sich die komprimierte elastische Zwischenlage 9 wieder entspannen, vergrößert also wiederum ihr Volumen und drückt kontinuierlich die zweite Metalllage 6 wieder zurück in Richtung ihrer Ausgangsposition, so dass demzufolge ein kontinuierlicher Kontakt der zweiten Metalllage 6 mit der Gießmasse bzw. dem Gießkörper gegeben ist.

Durch die Integration der elastischen und komprimierbaren Zwischenlage 9 ist das zweite Formteil 3 demzufolge automatisch oder selbstnachstellend ausgeführt, ohne dass für die erforderliche Bewegung der zweiten Metalllage 6 irgendwelche zusätzlichen externen Elemente erforderlich sind. Vielmehr wird über die integrierte elastische und komprimierbare Zwischenlage 9, also die Moosgummilage, eine automatische Rückstelleinrichtung vorgesehen, zu deren Betrieb keinerlei Steuermittel oder sonstige Elemente erforderlich sind. Vielmehr erfolgt ausschließlich eine inhärente Steuerung über den Innendruck im Gießhohlraum 4 und damit letztlich über die Gießmasse respektive deren Polymerisationsvorgang selbst.

Die Erwärmung respektive der Betrieb der beiden Heizeinrichtungen 7, 8 wird im Rahmen des Herstellungsverfahrens entsprechend gesteuert. Die Polymerisation wird, wie beschrieben, von der Sichtseite her, also vom ersten Formteil 2 her und damit über die erste Heizeinrichtung 7 gestartet. Die rohrförmigen Heizelemente 17 sind dabei entweder so verlegt oder derart in entsprechend separat beheizbare Gruppen aufgeteilt, dass zunächst eine Erwärmung am umlaufend äußeren Rand des Formhohlraums 4 erfolgt, so dass dort die Polymerisationsreaktion zuerst einsetzt, nachdem unmittelbar am Rand die zweite Metalllage 6 nicht respektive nur vernachlässigbar beweglich ist, weshalb dort ein Polymerschwund nicht ausgeglichen werden kann, wie dies aber im Volumen der Fall ist. Da die Gießmasse im Volumen aber noch fluid ist, während am Rand bereits die Polymerisation einsetzt, kann der Schwundausgleich über das Gießmassevolumen erfolgen. Das heißt, dass letztlich über die erste Heizeinrichtung 7 eine lokal unterschiedliche Temperatursteuerung möglich ist.

Die Erwärmung über die zweite Heizeinrichtung 8, also von der zweiten Formhälfte her, kann zeitverzögert erfolgen, beispielsweise erst nach mehreren Minuten, z.B. nach ca. 5 Minuten, wenn also bereits randseitig und gegebenenfalls auch an der Seite der ersten Metalllage 5 die Polymerisation bereits eingesetzt hat. Das heißt, dass demzufolge sowohl ein lokales Heizprofil als auch ein zeitliches Heizprofil individuell gefahren werden kann, letztlich abhängig von der Reaktionskinetik.

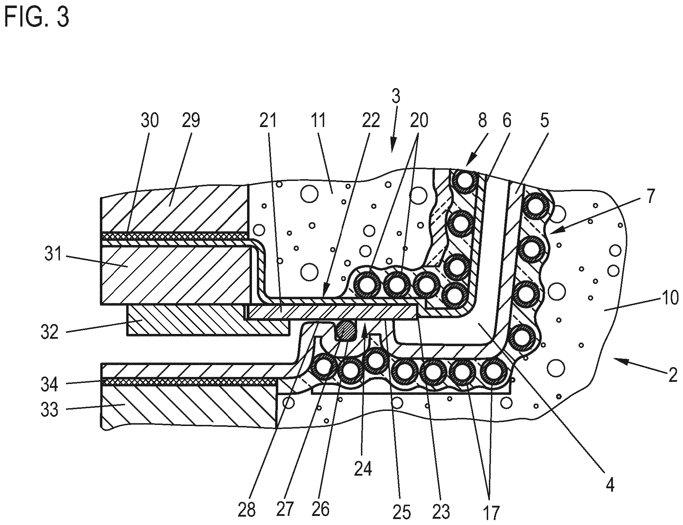

Fig. 3 zeigt eine vergrößerte Teilansicht des Bereichs III aus Fig. 1. Dieser Bereich zeigt den Anlagebereich des unteren, die Vorderseite formenden Formteils 2 an dem die Rückseite formenden oberen Formteil 3. Gezeigt ist ausschnittsweise der jeweilige Formteilträger 10, 11, die jeweilige Heizeinrichtung 7, 8 sowie die beiden Metalllagen 5, 6, die jeweils im Randbereich, der in Fig. 2 gezeigt ist, übereinander liegen. Der Gießhohlraum 4 erstreckt sich bis in diesen Überlappungsbereich, in dem also die beiden Metalllagen 5, 6 einander vertikal gesehen überlappen.

Anders als im Stand der Technik liegen hier jedoch die beiden Metalllagen 5, 6 nicht in direktem Kontakt aneinander an. Stattdessen sind beide Metalllagen 5, 6 thermisch voneinander entkoppelt. Dies wird dadurch realisiert, dass an der zweiten Metalllage 6 ein Isolationselement 21 angeordnet ist, das als Leiste ausgeführt ist und aus einem Kunststoffmaterial, vornehmlich einem Thermoplasten, einem Duroplasten oder einem Elastomer und insbesondere aus POM oder einem Polyurethan-Elastomer besteht. Im Beispiel ist an der Metalllage 6 eine das leistenförmige, im Querschnitt rechteckige Isolationselement tragende, gestufte Anlagefläche 22 ausgebildet, an der das Isolationselement 21 beispielsweise angeklebt ist. Das Isolationselement 21 läuft um den gesamten Rand herum, es kann aus mehreren aneinander anschließenden Elementabschnitten bestehen. Für seine Aufnahme ist die Anlagefläche 22 gestuft ausgeführt, so dass sich eine Anlagekante 23 ausbildet, an der das Isolationselement 21 zum Gießhohlraum 4 hin anliegt.

Das erste Formteil 2 weist an der ersten Metalllage 5 ebenfalls eine Anlagefläche 24 auf, die gestuft ausgeführt ist. Einerseits ist ein erster Auflagebereich 25 realisiert, der einen ersten erhabenen Bereich bildet, an dem das Isolationselement 21 aufliegt. Über eine umlaufende Nut 26, in der ein Dichtelement 27 in Form einer Dichtschnur oder eines Dichtgummis oder Ähnliches aufgenommen ist, getrennt folgt ein zweiter Auflagebereich 28, der, wie auch der erste Aufnahmebereich 25, flächig ist, jedoch etwas niedriger als der erste Aufnahmebereich 25 ist. Es ist demzufolge ein definiertes Höhenprofil an der Auflagefläche 24 ausgebildet. Die Höhendifferenz zwischen dem ersten und zweiten Auflagebereich 25, 28 beträgt beispielsweise 1 mm.

Wie Fig. 3 zeigt, ist die zweite Metalllage 6 im weiteren Randverlauf gewinkelt ausgeführt und ist an einem Auflager 29 des zweiten Formteilträgers 11 über eine Isolierungsschicht 30 aufgelagert und daran über eine Klemmleiste 31 verklemmt. An dieser Klemmleiste 31 ist im gezeigten Beispiel eine weitere Klemmleiste 32 befestigt, über die das Isolationselement 21 randseitig verklemmt wird, gegebenenfalls auch zusätzlich zur Verklebung.

In entsprechender Weise ist auch die erste Metalllage 5 im weiteren Randbereich gewinkelt ausgeführt und an einem Auflager 33 des ersten Formteilträgers 10 über eine Isolierung 34 aufgelagert.

Wird die Gießform 1 geschlossen, so wird das obere zweite Formteil 3 vertikal nach unten in Richtung des unteren ersten Formteils 2 bewegt. Einzig und allein im Randbereich kommt es zu einem Kontakt der beiden Formteile 2, 3 und hier auch ausschließlich zwischen dem umlaufenden Isolationselement 21 und der unteren Metalllage 5. Wie beschrieben ragt das Isolationselement 21 von der Auflagefläche 22 ab in Richtung der Auflagefläche 24 der ersten Metalllage 5. Mit zunehmendem Absenken läuft das Isolationselement 21 zunächst gegen den ersten Auflagebereich 25 und gleichzeitig auch gegen das Dichtelement 27. Mit weiterem Absenken und Zunahme der auf das Isolationselement 21 wirkenden Last wird das Isolationselement 21 etwas verformt, da es wie beschrieben aus einem Kunststoffmaterial besteht, das eine gewisse Weichheit oder Elastizität aufweist. Aufgrund der Verformung gelangt es sodann in Anlage an den zweiten Auflagebereich 28. Das heißt, dass es umlaufend großflächig dann über beide Auflagebereiche 25, 28 aufgelagert und abgestützt ist, so dass sich eine große Stützfläche ergibt, was zu einer geringen Flächenpressung führt. Das komprimierte Dichtelement 27 bildet eine weitere Dichtebene zusätzlich zur Abdichtung des Gießhohlraums 4 über das Isolationselement 21 selbst.

In der Schließstellung ist demzufolge, wie Fig. 3 zeigt, an keiner Stelle irgendein Kontakt der beiden Metalllagen 5, 6 miteinander gegeben. Beide Formteile 2, 3 sind einzig über das Isolationselement 21 miteinander verbunden respektive gegeneinander abgestützt und abgedichtet. Dabei ragt das Isolationselement 21 auch geringfügig in den Gießhohlraum 4 ein bzw. begrenzt diesen, so dass auch quasi horizontal ein entsprechender Abstand zwischen den beiden Metalllagen 5, 6 gegeben ist.

Durch die thermische Entkopplung wird erreicht, dass es zwischen den beiden Metalllagen 5, 6 keinerlei Wärmeübertragung gibt respektive keinen Temperaturausgleich stattfindet, vielmehr sind beide individuell und separat über die zugeordneten Heizeinrichtungen 7, 8 beheizbar. Dies ermöglicht es, an der Vorder- und Rückseite individuelle Temperaturprofile zu fahren, wie sie für den Polymerisationsvorgang sowie dessen Steuerung erforderlich sind.

Das Isolationselement 21 dient aber nicht nur der thermischen Isolierung, sondern auch dem Ausgleich etwaiger Unebenheiten in den Auflageflächen respektive Auflagebereichen. Denn wie beschrieben ist das Isolationselement hinreichend elastisch respektive flexibel, so dass es sich exakt an die jeweilige Form des Auflagebereichs, insbesondere des ersten Auflagebereichs 25 zum Gießhohlraum 4 hin, anpassen kann. Da das Isolationselement 21 auch gequetscht wird, ist demzufolge eine vollkommen spaltfreie Anlage gegeben, das heißt, dass sich keinerlei Mikrospalte in diesem Bereich bilden, die zu Angussrändern und Ähnlichem führen würden, die nachzubearbeiten wären.

Wie Fig. 3 ferner zeigt, sind sowohl seitens der ersten Heizeinrichtung 7 als auch der zweiten Heizeinrichtung 8 randseitig die Heizelemente 17 bzw. 20 enger verlegt als in den daran anschließenden Bereichen der Heizeinrichtungen 7, 8. Dies ermöglicht es, im kritischen Randbereich eine größere Energiemenge, also mehr Wärme in die Polymermasse einzubringen, das heißt, dass es dort, verglichen mit der sonstigen Fläche, zu einem schnelleren Erwärmen der Metalllagen 5, 6 und damit auch der Gießmasse kommt. Diese polymerisiert daher randseitig früher und schneller aus als im sonstigen Volumen. Da am Rand keine Beweglichkeit der zweiten Metalllage 6 resultierend aus der Komprimierung der Zwischenlage 9 gegeben ist, kann dort ein etwaiger Schwund über eine solche Nachführung der Metalllage 6 nicht ausgeglichen werden. Da jedoch die Gießmasse im sonstigen Hohlraumvolumen noch flüssig ist, während sie randseitig bereits auszupolymerisieren beginnt, drückt demzufolge die flüssige Gießmasse in den Randbereich, so dass dort ein etwaiger Schwund unmittelbar durch nachfließende Gießmasse wieder ausgeglichen wird. Das heißt, dass ein fehlerfreier Rand hergestellt werden kann.

Die spezifische Randbeheizung kann über die verdichtete Verlegung der Heizelemente hinaus auch noch dahingehend individuell gestaltet werden, dass die dort verlegten Heizelemente auch als separater Heizkreis individuell mit Heizfluid versorgt oder bestromt werden können, so dass auch ein zeitlich unterschiedlicher Heizbetrieb erfolgen kann, oder beispielsweise ein heißeres Fluid durchgeführt oder stärker bestromt werden kann etc.

## Patentansprüche

1. Gießform zur Herstellung eines eine Vorder- und eine Rückseite aufweisenden Gießkörpers aus einer aushärtbaren Gießmasse, mit zumindest einem die Vorderseite formenden ersten Formteil (2) und einem die Rückseite formenden zweiten Formteil (3), die zusammen einen Gießhohlraum (4) begrenzen, wobei das erste Formteil (2) eine den Gießhohlraum (4) begrenzende erste Metalllage (5) und das zweite Formteil (3) eine den Gießhohlraum (4) begrenzende zweite Metalllage (6) aufweist, wobei zumindest eine Metalllage (5, 6) zur Veränderung des Gießhohlraumvolumens zumindest abschnittsweise verformbar ist, **dadurch gekennzeichnet, dass** zumindest ein Formteil (3) eine flächige Zwischenlage (9) aus einem elastisch verformbaren und komprimierbaren Material aufweist, gegen die die Metalllage (6) des Formteils (3) unter Aufbau einer Rückstellkraft seitens der sich verformenden Zwischenlage (9) bewegbar ist.

2. Gießform nach Anspruch 1, **dadurch gekennzeichnet, dass** das zweite Formteil (3) die Zwischenlage (9) aufweist und die zweite Metalllage (6) gegen die Zwischenlage (9) bewegbar ist.

3. Gießform nach Anspruch 1 oder 2, **dadurch gekennzeichnet, dass** die Zwischenlage (9) aus einem elastischen und komprimierbaren Kunststoffmaterial ist.

4. Gießform nach Anspruch 2, **dadurch gekennzeichnet, dass** die Zwischenlage (9) aus Moosgummi (35) ist.

5. Gießform nach Anspruch 3, **dadurch gekennzeichnet, dass** die Zwischenlage (9) eine Shore Härte Typ A von 5° - 35°, vorzugsweise 15° +/- 5° aufweist.

6. Gießform nach einem der vorangehenden Ansprüche, **dadurch gekennzeichnet, dass** die Zwischenlage (9) eine Dicke von 2 - 10 mm, insbesondere von 3 - 7 mm und vorzugsweise von 4 - 6 mm aufweist.

7. Gießform nach einem der vorangehenden Ansprüche, **dadurch gekennzeichnet, dass** die Zwischenlage (9) wenigstens 50% der Fläche, vorzugsweise die gesamte Fläche, mit der die Metalllage (5, 6) den Gießhohlraum (4) begrenzt, überdeckt.

8. Gießform nach einem der vorangehenden Ansprüche, **dadurch gekennzeichnet, dass** an der Rückseite der bewegbaren Metalllage (6) eine diese flächig belegende Heizeinrichtung (8) vorgesehen ist, die an der flächigen Zwischenlage (9) anliegt.

9. Gießform nach Anspruch 7, **dadurch gekennzeichnet, dass** die Heizeinrichtung (8) rohr- oder bandförmige Heizelemente (20), die in einer elastischen Masse eingebettet sind, aufweist.

10. Gießform nach Anspruch 8, **dadurch gekennzeichnet, dass** die Masse eine Wärmeleitmasse (19) ist.

11. Gießform nach einem der vorangehenden Ansprüche, **dadurch gekennzeichnet, dass** die Zwischenlage (9) direkt an einem Formteilträger (10, 11) des Formteils (2, 3) angeordnet ist.

12. Gießform nach einem der vorangehenden Ansprüche, **dadurch gekennzeichnet, dass** das erste Formteil (2) einen ersten Formteilträger (10) und das zweite Formteil (3) einen zweiten Formteilträger (11) aufweist, wobei der erste und der zweite Formteilträger (10, 11) aus Polymerbeton ist.

13. Gießform nach einem der vorangehenden Ansprüche, **dadurch gekennzeichnet, dass** die erste und die zweite Metalllage (5, 6) aus Nickel sind.

14. Gießform nach einem der vorangehenden Ansprüche, **dadurch gekennzeichnet, dass** die erste Metalllage (5) eine Dicke von 3 - 8 mm, insbesondere von 4 - 7 mm und vorzugsweise von 6 mm und die zweite Metalllage (6) eine Dicke von 1 - 4 mm und vorzugsweise von 2,5 mm aufweist.

15. Gießform nach einem der vorangehenden Ansprüche, **dadurch gekennzeichnet, dass** an der Rückseite der nicht bewegbaren Metalllage (5) eine diese flächig belegende Heizeinrichtung (7) vorgesehen ist.

16. Gießform nach Anspruch 15, **dadurch gekennzeichnet, dass** die Heizeinrichtung (7) rohr- oder bandförmige Heizelemente (17), die in einer elastischen Masse eingebettet sind, aufweist.

17. Gießform nach Anspruch 16, **dadurch gekennzeichnet, dass** die Masse eine Wärmeleitmasse (18) ist.

18. Gießform nach einem der vorangehenden Ansprüche, **dadurch gekennzeichnet, dass** an der Metalllage (5, 6) des ersten oder des zweiten Formteils (2, 3) randseitig umlaufend ein Isolationselement (21) angeordnet ist, das in der Schließstellung randseitig an der anderen Metalllage (5, 6) anliegt und beide einander nicht berührenden Metalllagen (5, 6) thermisch voneinander trennt.

19. Gießform nach einem der vorangehenden Ansprüche, **dadurch gekennzeichnet, dass** das Isolationselement (21) aus einem Kunststoff, insbesondere aus einem Thermoplast, einem Duroplast oder einem Elastomer besteht.

20. Gießform nach Anspruch 18 oder 19, **dadurch gekennzeichnet, dass** der Randbereich der Metalllage (5, 6), gegen die sich das Isolationselement (21) beim Schließen legt, gestuft ausgeführt ist und einen ersten Auflagebereich (25), gegen den das Isolationselement (21) zuerst läuft, und einen zweiten Auflagebereich (28), gegen den das zwischen dem ersten Auflagebereich (25) und der das Isolationselement (21) tragenden Metalllage (5, 6) gequetschte Isolationselement (21) nach seiner Verformung läuft, aufweist.

21. Gießform nach einem der vorangehenden Ansprüche, **dadurch gekennzeichnet, dass** an der Metalllage (5, 6), gegen die das Isolationselement (21) beim Schließen läuft, ein umlaufendes und in der Schließstellung an dem Isolationselement (21) anliegendes Dichtelement (27) vorgesehen ist, wobei vorzugsweise das Dichtelement (27) in einer Nut (26) zwischen dem ersten und dem zweiten Anlagebereich (25, 28) aufgenommen ist.
